## Europäisches Patentamt

## European Patent Office

## Office européen des brevets

(11) Veröffentlichungsnummer: **0 111 268**

**B1**

(12) **EUROPÄISCHE PATENTSCHRIFT**

(45) Veröffentlichungstag der Patentschrift:
**23.07.86**

(21) Anmeldenummer: **83112111.6**

(22) Anmeldetag: **01.12.83**

(51) Int. Cl.⁴: **A 47 B 88/14,** A 47 B 88/10, F 16 C 29/04

(54) **Wälzgelagerte Teleskopschiene für Schubfächer oder dergleichen.**

(30) Priorität: **07.12.82 DE 3245209**

(43) Veröffentlichungstag der Anmeldung:
**20.06.84 Patentblatt 84/25**

(45) Bekanntmachung des Hinweises auf die Patenterteilung:
**23.07.86 Patentblatt 86/30**

(84) Benannte Vertragsstaaten:
**DE FR GB IT NL SE**

(56) Entgegenhaltungen:
**FR-A-2 239 149**
**US-A-3 323 853**

(73) Patentinhaber: **Nixdorf Computer Aktiengesellschaft, Fürstenallee 7, D-4790 Paderborn (DE)**

(72) Erfinder: **Knoop, Franz- Josef, Sonnenhang 7, D-4793 Büren- Steinhausen (DE)**

(74) Vertreter: **Patentanwälte Schaumburg & Thoenes, Mauerkircherstrasse 31 Postfach 86 07 48, D-8000 München 80 (DE)**

## Beschreibung

Die Erfindung betrifft eine Teleskopschiene gemäß dem Oberbegriff des Anspruchs 1.

Derartige Teleskopschienen dienen zur leichtgängigen verschiebbaren Lagerung von Schubfächern, technischen Einschubmodulen o. dgl. in entsprechende, diese aufnehmende Schränke, Gehäuse o. dgl. In der einfachsten Ausgestaltung bestehen diese Teleskopschienen aus zwei etwa gleich langen Einzelschienen, von denen die erste am Gehäuse, die zweite am Schubfach befestigt ist. Die zweite Einzelschiene ist gegenüber der ersten Einzelschiene über Wälzkörper, beispielsweise Kugeln oder Rollen, verschiebbar gelagert. Der Auszugsweg derartiger Teleskopschienen ist im allgemeinen kürzer als die Länge der Einzelschienen, da zur Aufnahme des vom Gewicht des Schubfaches herrührenden Momentes auch im ausgezogenen Zustand ein Teil der bewegten Schiene sich mit der festen Schiene überlappen muß. Um ein Schubfach vollständig aus dem zugehörigen Gehäuse ziehen zu können, werden Doppelteleskopschienen verwendet, bei denen z.B. in einer im Gehäuse befestigten Außenschiene eine bewegliche Innenschiene und auf dieser wiederum eine mit dem Schubfach verbundene Außenschiene gelagert ist. Dadurch läßt sich der Auszugsweg gegenüber einer Einfach-Teleskopschiene verdoppeln.

Es sind schon Teleskopschienen der gattungsgemäßen Art bekannt, bei denen die Einzelschienen jeweils als gezogene oder aus Blech geformte Metallprofile ausgebildet sind (DE-PS 22 66 241). Ein Nachteil derartiger Teleskopschienen wird darin gesehen, daß sie verhältnismäßig hohe Laufgeräusche verursachen, da einerseits der einfache und wenig präzise Aufbau der Schienen zur Entstehung derartiger Geräusche beiträgt und da andererseits wegen des innigen Kontaktes aller metallischen Teile miteinander eine kaum gedämpfte Übertragung des Körperschalls bis zu den Schallabstrahlenden Flächen der Gehäuse oder Schränke stattfindet. Umgekehrt werden Erschütterungen aus der Umgebung über die Schienen auf die Schubfächer und die darauf befindlichen Gegenstände, z.B. technische Geräte, übertragen. Insbesondere bei der Lagerung von Magnetplattenlaufwerken ist für eine einwandfreie Funktion eine weitgehende Erschütterungsfreiheit erforderlich. Es ist deshalb überall da, wo eine Schwingungsübertragung unerwünscht sind, erforderlich, die Schienen jeweils über schwingungsdämpfende Zwischenstücke am Schrank und/oder dem Schubfach zu befestigen. Dadurch ergibt sich einerseits ein zusätzlicher Montageaufwand, insbesondere, wenn die Stellen, an denen die Schienen montiert werden, schlecht zugänglich sind. Andererseits verringern die Zwischenstücke im allgemeinen auch bei vorgegebener Gehäusegröße die mögliche Breite der Schubfächer um das Einbaumaß der Zwischenstücke.

Ein anderer Nachteil wird darin gesehen, daß eine starre Befestigung der Schienen sowohl am Schubfach als auch an der Gehäusewand wegen der einzuhaltenden Maßgenauigkeit einen hohen Justier- und Montageaufwand erforderlich macht, da eine die Leichtlaufeigenschaften nachteilig beeinflussende Verspannung der Schienen gegeneinander vermieden werden muß.

Es ist die Aufgabe der vorliegenden Erfindung, eine Teleskopschiene der gattungsgemäßen Art zu schaffen, bei der ohne Verwendung zusätzlicher, elastischer Zwischenstücke einerseits die Entstehung und Weiterleitung von Laufgeräuschen und andererseits die Übertragung von Erschütterungen aus der Umgebung gering gehalten werden kann, bei der Verspannungen und damit eine Verschlechterung der Laufeigenschaften der Schubfächer bzw. Gehäuse ausgeschlossen werden, und bei der eine einfache Montage ohne Einbußen an Einbauraum für die Schubfächer gegeben ist.

Diese Aufgabe ist erfindungsgemäß durch die im Kennzeichen des Anspruches 1 enthaltenen Merkmale gelöst. Durch die elastische Lagerung der Laufbahnen wenigstens einer Schiene wird sowohl die Entstehung der Laufgeräusche als auch deren Weitergabe infolge der Dämpfungseigenschaften der elastischen Unterlage beträchtlich verringert. Außerdem werden durch die elastische Lagerung der Laufbahnen auch Maßungenauigkeiten zwischen Schubfach und Gehäuse ausgeglichen, ohne daß sich die Schienen gegeneinänder verspannen. Als weiterer Vorteil werden auch Erschütterungen der Umgebung von den durch die Schienen gelagerten Bauteilen, z.B. Magnetplattenlaufwerken ferngehalten.

Die Laufbahnen können über mehr oder weniger starke Unterlagen beispielsweise auf einem metallischen Schienenkörper befestigt sein. In einer anderen Ausgestaltung der Erfindung ist jedoch der ganze Schienenkörper als elastischer, die Laufbahnen tragender Steg ausgebildet. Auf diese Weise ergibt sich ein einfaches Bauteil, bei welchem die Anzahl der kritischen Verbindungen zwischen Bauteilen aus unterschiedlichem Material möglichst gering ist.

Die letztgenannte Ausbildung eignet sich insbesondere für die Innenschiene. Dabei ist vorgesehen, daß der Steg im Querschnitt etwa die Form eines Rechteckes hat, auf dessen Schmalseiten die Laufbahnen angeordnet sind, wobei der Steg die gleiche Breite hat wie die Laufbahnen.

In weiterer Ausgestaltung der Erfindung sind an dem elastischen Steg Mittel zum Befestigen desselben am Schubfach bzw. an einer Gehäusewand vorgesehen. Damit die in den Laufbahnen entstehenend Geräusche nicht an das Schubfach bzw. das Gehäuse weitergeleitet werden, ist darauf zu achten, daß die Befestigungsmittel die Laufbahnen nicht direkt berühren.

Eine Anpassung der Schienen an die aufzunehmenden Gewichte kann in gewissem Rahmen durch die Wahl der elastischen Eigenschaften des Stegmaterials erfolgen. Außerdem ist nach einem weiteren Merkmal der Erfindung vorgesehen, daß an wenigstens einer Seitenfläche des elastischen Steges eine Verstärkungslasche o.dgl. aus einem gegenüber dem Steg starren Material angeordnet ist. Dabei können die Befestigungsmittel an dieser Verstärkungslasche angeordnet sein.

Die Erfindung kann auch bei Mehrfach-Teleskopschienen Verwendung finden. Für den Aufbau einer Zweifach-Teleskopschiene ist beispielsweise vorgesehen, daß die Laufbahnen jeweils zwei parallele Laufrillen umfassen. Die so gebildete Innenschiene weist damit in an sich bekannter Weise zwei parallele Laufbahnhälften auf, auf deren jeder eine Außenschiene geführt ist, wobei die eine mit dem Gehäuse, die andere mit dem Schubfach verbunden ist. Dabei ist es wiederum zweckmäßig, daß sich die beiden Laufrillen nicht berühren, so daß jedes der schallerzeugenden Bauteile von allen anderen weitgehend schallisoliert ist.

Als Wälzkörper kommen beispielsweise Kugeln oder Zylinderrollen in Frage, wobei die Laufbahnen der Form der Wälzkörper in bekannter Weise angepaßt ist.

Als Material für die elastische Unterlage der Laufbahnen bzw. den elastischen Steg wird vorzugsweise Gummi verwendet, während die Laufbahnen, der Verstärkungssteg sowie die Verbindungsmittel in an sich bekannter Weise aus metallischem Werkstoff bestehen; die Metallteile werden mit dem Gummi vorzugsweise durch Vulkanisieren verbunden.

Zur Herstellung der Schienen mit einem gänzlich aus elastischem Material bestehenden Schienenkörper ist erfindungsgemäß ein Verfahren vorgesehen, bei welchem die starren Schienenteile, hier die Laufbahnen, in eine Vorrichtung eingelegt und durch Schablonen o.dgl. in ihrer exakten gegenseitigen position fixiert werden; das elastische Material wird in die vorgesehenen Freiräume eingebracht und mit den Schienenteilen z.B. durch Kleben o.dgl. verbunden.

Zur Herstellung einer Schiene, bei welcher die Laufbahnen über elastische Unterlagen an einem starren Mittelsteg befestigt sind, ist dagegen vorgesehen, den Mittelsteg und die Laufbahnen zunächst einstückig herzustellen. Nach dem Einbringen des elastischen Materials und nach dem Verbinden desselben und den starren Schienenteilen werden die Verbindungsstege zwischen Mittelsteg und Laufbahnen durchgetrennt, sodaß diese jeweils nur noch über die elastischen Unterlagen verbunden sind.

Für das elastische Material wird vorzugsweise Gummi, für die starren Schienenteile ein metallisches Material verwendet. Diese Materialen werden in einer bevorzugten Ausgestaltung der erfindungsgemäßen Herstellungsverfahren durch Vulkanisieren in einer Vulkanisiervorrichtung miteinander verbunden.

Weitere Vorteile und Merkmale der Erfindung ergeben sich aus den Ansprüchen, der Zeichnung sowie der Zeichnungsbeschreibung. Mehrere Ausführungsbeispiele der Erfindung sind in der Zeichnung dargestellt und im folgenden näher beschrieben. Es zeigen:

Fig. 1 in perspektivischer Darstellung eine Einfach-Teleskopschiene mit einem als elastischer Steg ausgebildeten Schienenkörper der Innenschiene;

Fig. 2 einen Querschnitt durch die Anordnung gemäß Fig. 1,

Fig. 3 einen Querschnitt durch ein anderes Ausführungsbeispiel einer Innenschiene,

Fig. 4 einen Querschnitt durch eine andere Ausführung einer Einfach-Teleskopschiene,

Fig. 5 eine Ansicht einer Innenschiene gemäß Fig. 4,

Fig. 6 einen Querschnitt durch eine Innenschiene für eine Zweifach-Teleskopschiene,

Fig. 7 einen Querschnitt durch eine Innenschiene mit einer elastischen Unterlage zwischen Schienenkörper und Laufbahnen,

Fig. 8 schematisch eine Vorrichtung zur Herstellung einer Innenschiene etwa gemäß Fig. 4,

Fig. 9 eine andere Vorrichtung zur Herstellung einer Schiene gemäß Fig. 10,

Fig. 10 eine Schiene mit starren Mittelsteg und damit über elastische Unterlagen verbundenen Laufbahnen,

Fig. 11 ein Einbaubeispiel für eine Schiene gemäß Fig. 10.

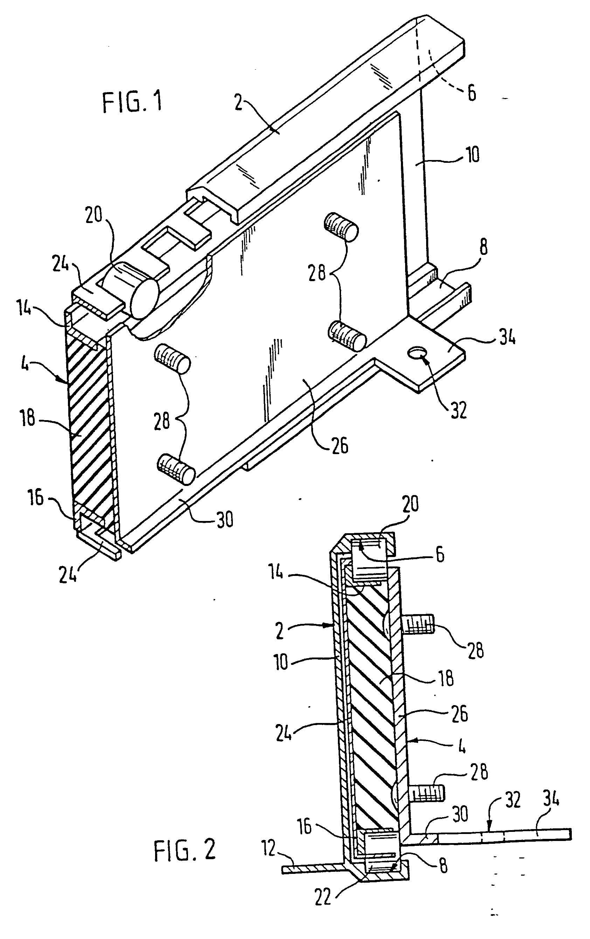

Die in den Fig. 1 und 2 dargestellte Einfach-Teleskopschiene besteht im Wesentlichen aus einer Außenschiene 2 und einer dieser gegenüber verschiebbar gelagerten Innenschiene 4. Die Außenschiene 2 weist zwei gegeneinander gerichtete Laufbahnen 6, 8 auf, welche mit dem eigentlichen Schienenkörper 10 einstückig ausgebildet sind. Außerdem ist am Schienenkörper 10 ein Befestigungsflansch 12 angeordnet, welcher zur Befestigung der Außenschiene 2 beispielsweise an der Wand eines Schrankes oder eines Gehäuses bestimmt ist. Die gesamte Außenschiene ist beispielsweise ein gezogenes Strangprofil.

Die Innenschiene 4 weist zwei Laufbahnen 14, 16 auf, welche jeweils den Laufbahnen 6, 8 zugeordnet und diesen zugewandt sind. Der eigentliche Schienenkörper 18 der Innenschiene 4 ist als elastischer Steg aus Gummi ausgebildet. Zwischen den Laufbahnen 6 und 14 einerseits sowie 8 und 16 andererseits sind jeweils Zylinderrollen 20 bzw. 22 angeordnet, die durch einen Rollenkäfig 24 gehalten und geführt werden. An der in den Fig. 1 und 2 rechten Seitenfläche des als elastischer, die Laufbahnen 14 und 16 tragender Steg ausgebildeten Schienenkörpers 1ß ist eine Verstärkungslasche 26 anvulkanisiert, welche einerseits zur Versteifung des Steges 18 dient, andererseits Mittel 28 zum Befestigen der Innenschiene 4 beispielsweise an einem Schubfach trägt. Ein an der Verstärkungslasche 26 ausgebildeter, rechtwinklig abstehender Randstreifen 30 dient beispielsweise zum Aufsetzen des Schubfaches. Der Randstreifen 30 geht an seinem in Fig. 1 hinteren Ende in eine mit einer Bohrung 32 versehene Befestigungslasche 34 über.

Wie in den Fig. 1 und 2 erkennbar ist, haben die Laufbahnen 14, 16 jeweils ein L-profil, wobei der untere Schenkel die eigentliche Lauffläche, der seitliche Schenkel eine Seitenbegrenzung der Laufbahn bildet. Die andere Seitenbegrenzung der Laufbahn wird durch die jeweils über die Höhe der Laufbahn ragende Verstärkungslasche 26 gebildet. Wie aus den Fig.1 und 2 ebenfalls zu erkennen ist, hat die Verstärkungslasche 26 keine Berührung mit den Laufbahnen 14, 16, so daß die von den Laufbahnen ausgehenden Geräusche nicht auf die Verstärkungslasche und damit nicht auf das Schubfach übertragen werden.

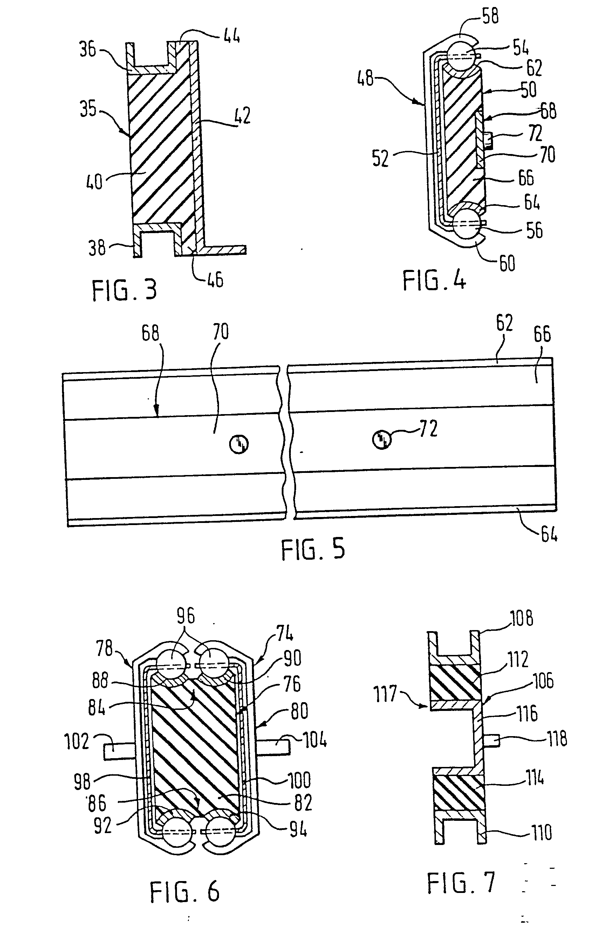

Fig. 3 zeigt ein Ausführungsbeispiel einer Innenschiene 35, bei welcher wiederum zwei Laufbahnen 36, 38 an einem als elastischer Steg ausgebildeten Schienenkörper 40 angeordnet sind. Die Laufbahnen 36, 38 weisen jeweils ein U-Profil auf. Die seitlich an dem elastischen Schienenkörper 40 angeordnete Verstärkungslasche 42 hat wiederum keine Berührung mit den Laufbahnen 36, 38, sondern ist von diesen jeweils durch einen Streifen 44, 46 des elastischen Schienenkörpers 40 getrennt, so daß wiederum Laufgeräusche von der Verstärkungslasche und damit vom Gehäuse bzw. dem Schubfach, an welchem die Innenschiene 35 befestigt ist, ferngehalten werden.

Fig. 4 zeigt ein weiteres Ausführungsbeispiel einer Einfach-Teleskopschiene im Querschnitt, mit einer Außenschiene 48, einer Innenschiene 50 sowie den zwischen Außenschiene und Innenschiene angeordneten, durch einen Kugelkäfig 52 gehaltenen und geführten Kugeln 54, 56. Die Laufbahnen 58, 60 einerseits sowie 62, 64 andererseits haben im Querschnitt jeweils die Form eines Ringsegmentes. Der Schienenkörper 66 der Innenschiene 50 ist wiederum als elastischer Steg ausgebildet. An der in Fig. 4 rechten Seite des Schienenkörpers 66 sind Mittel 68 zum Befestigen der Innenschiene an Schubfach bzw. einer Gehäusewand angeordnet. Wie insbesondere Fig. 5 zeigt, bestehen diese Mittel 6ß aus einer in den Steg einvulkanisierten Platte 70, beispielsweise aus einem metallischen Werkstoff, mit mehreren Befestigungsbolzen 72.

Fig. 6 zeigt einen Querschnitt einer Zweifach-Teleskopschiene 74 mit einer Innenschiene 76 sowie zwei Außenschienen 78, 80. Die Außenschienen 78, 80 entsprechen im wesentlichen der in Fig. 4 dargestellten Außenschiene 48. Die Innenschiene 76 stellt im wesentlichen eine Verdoppelung der in Fig. 4 dargestellten Innenschiene 50 dar. Die auf dem als elastischer Steg ausgebildeten Schienenkörper 82 angeordneten Laufbahnen 84, 86 umfassen jeweils zwei parallele Laufrillen 88, 90 bzw. 92, 94. Die Laufrillen 88, 92 einerseits bzw. 90, 94 andererseits bilden jeweils eine Laufbahnhälfte. Auf jeder dieser Laufbahnhälften ist eine Außenschiene 78 bzw. 80 geführt. Die Kugeln 96 sind wiederum jeweils durch Kugelkäfige 98 bzw. 100 geführt. Die Laufrillen berühren sich nicht, so daß die jeweils in einer Laufbahnhälfte erzeugten Geräusche nicht weiter übertragen werden. Jede der Außenschienen 78, 80 trägt Mittel 102, 104 zum Befestigen derselben an einer Gehäusewand bzw. einem Schubfach.

Die in Fig. 7 dargestellte Innenschiene 106 zeigt gegenüber den bisher beschriebenen Ausführungsbeispielen einen anderen Aufbau. Die Laufbahnen 108, 110 sind jeweils über elastische Unterlagen 112, 114 auf dem starren Mittelsteg 116 befestigt. Der Mittelsteg 116 und die Unterlagen 112, 114 bilden den eigentlichen Schienenkörper 117. Der Mittelsteg 116 weist Mittel 118 zum Befestigen der Innenschiene 106 an einen Schubfach bzw. einer Gehäusewand auf.

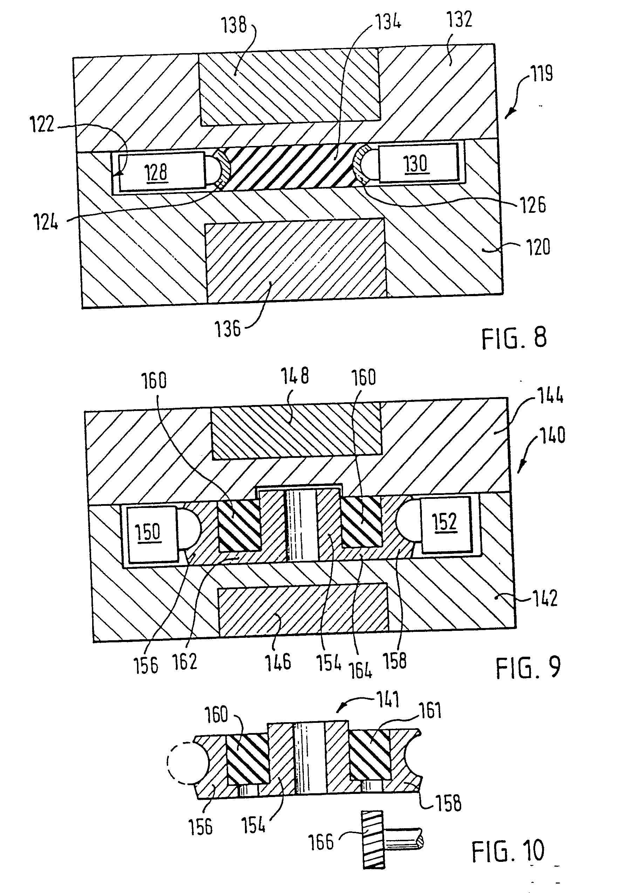

Fig. 8 zeigt schematisch eine Vorrichtung 119 zur Herstellung einer Innenschiene etwa gemäß Fig. 4. Sie besteht aus einer Form 120, deren Formöffnung 122 nach oben offen ist. In diese Formöffnungen werden die Laufbahnen 124, 126 eingelegt und durch seitlich verstellbare Schablonen 128, 130 in ihrer genauen Position fixiert. Die Formöffnung 122 kann durch einen Stempel 132 abgedeckt werden.

Nach dem Einlegen der Laufbahnen 124, 126 wird auf die Formöffnung 122 eine Rohgummimatte aufgelegt, deren Volumen dem Volumen des späteren Schienenkörpers 134 entspricht. Sowohl die Form 120 als auch der Stempel 132 haben heizbare Einlagen 136 bzw. 138. Die Form 120 sowie der Stempel 132 sind beispielsweise jeweils aus Stahl, die heizbaren Einlagen 136 bzw. 138 aus Aluminium. Durch das Aufsetzen des beheizten Stempels 132 auf die beheizte Form 120 verflüssigt sich die Rohgummimatte und fließt zwischen die Laufbahnen 124, 126, wo sich der Gummi mit den Laufbahnen durch einen Vulkanisiervorgang verbindet. Sollen am Schienenkörper 134 Verstärkungslaschen etwa gemäß Fig. 3 oder Befestigungsmittel gemäß Fig. 4 angebracht werden, werden diese vor dem Vulkanisiervorgang in die Form 120 eingelegt, die zur Aufnahme dieser Teile ausgebildet sein muß. Nach dem Vulkanisiervorgang wird der Stempel 132 abgehoben und die fertige Schiene entnommen.

Fig. 9 zeigt eine Vorrichtung 140 etwa gemäß Fig. 8 zur Herstellung einer Schiene 141, mit einer Form 142 und einem Stempel 144, die beide mit heizbaren Einlagen 146, 148 ausgestattet sind. Schablonen 150, 152 dienen zum Fixieren des aus dem Mittelsteg 154 und den Laufbahnen 156, 158 einstückig gebildeten Bauteils. Das die Unterlagen 160, 161 bildende Gummimaterial wird z.B. in Form von Rohgummi-Matten auf das Bauteil aufgelegt, über den aufgesetzten Stempel 144 verflüssigt und in die vorgesehenen Räume gedrückt.

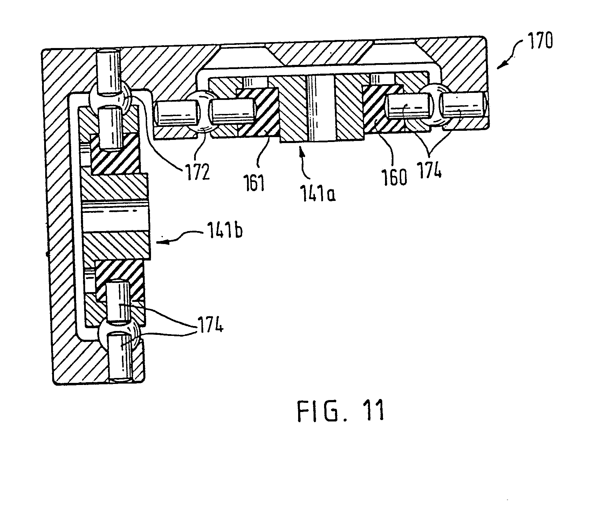

Das so hergestellte Bauteil wird dann der Vorrichtung entnommen. In einer gesonderten Vorrichtung werden die Verbindungsstege 162, 164 zwischen dem Mittelsteg 154 und den Laufbahnen mittels Trennsägen 166 durchgetrennt, wie aus Fig. 10 erkennbar ist. Die Laufbahnen 156, 158 und der Mittelsteg 154 sind dann nur noch über die schwingungsdämpfenden Unterlagen 160, 161 miteinander verbunden.

Fig. 11 zeigt ein Einbaubeispiel für Schienen gemäß Fig. 10. Eine Winkelschiene 170 bildet zwei winklig zueinander stehende Außenschienen, in denen zwei Innenschienen 141a und 141 b verschiebbar gelagert sind. Der zwischen den Laufbahnen der Außenschienen und der Innenschienen verbleibende Raum nimmt die Kugeln 172 auf. Jeweils an den Schienenenden angeordnete Anschlagstifte 174 dienen zur Begrenzung des Ausziehweges der Schienen. Die gezeigte Anordnung erlaubt eine präzise, verspannungsfreie Führung und gewährleistet eine weitgehende Schwingungsdämpfung zwischen Außen- und Innenschienen.

**Patentansprüche**

1. Wälzgelagerte Teleskopschiene für Schubfächer o.dgl., umfassend wenigstens eine Außenschiene (2; 48; 78, 80) mit zwei an einem Schienenkörper (10) angeordneten, gegeneinander gerichteten Laufbahnen (6, 8; 58, 60) sowie umfassend wenigstens eine Innenschiene (4, 35, 50, 76, 106, 141) mit zwei an einem Schienenkörper (18, 40, 50, 82, 117) angeordneten, jeweils den zugeordneten Laufbahnen (6, 8; 58, 60) der Außenschiene zugewandten Laufbahnen (14, 16; 36, 38; 62, 64; 84, 86; 108, 110; 156, 158), dadurch gekennzeichnet, daß die Laufbahnen (14, 16; 36, 38; 62, 64; 84, 86; 108, 110; 156, 158) wenigstens einer Schiene (4, 35, 50, 76, 106, 141) jeweils auf eine Unterlage (18, 40, 66, 82, 112, 114, 160, 161) aus einem elastischen Material gebettet und mit dieser verbunden sind.

2. Teleskopschiene nach Anspruch 1, dadurch gekennzeichnet, daß der Schienenkörper (18, 40, 66, 82) als elastischer, die Laufbahnen (14, 16; 36, 38; 62, 64; 84, 86) tragender Steg ausgebildet ist.

3. Teleskopschiene nach Anspruch 2, dadurch gekennzeichnet, daß an dem elastischen Schienenkörper (18, 40, 66, 82) die Laufbahnen (14, 16; 36, 38; 62, 64; 84, 86) nicht berührende Mittel (28, 42, 68, 102, 104) zum Befestigen der Schiene am Schubfach bzw. an dem dieses aufnehmenden Gehäuse o.dgl. angeordnet sind.

4. Teleskopschiene nach einem der Ansprüche 2 oder 3, dadurch gekennzeichnet, daß der Schienenkörper (18, 40, 66, 82) der Innenschiene als elastischer Steg ausgebildet ist und daß er im Querschnitt etwa die Form eines Rechteckes mit an den Schmalseiten dieses Rechteckes angeordneten Laufbahnen (14, 16; 36, 38; 62, 64; 84, 86) aufweist.

5. Teleskopschiene nach einem der Ansprüche 2 bis 4, dadurch gekennzeichnet, daß an wenigstens einer Seitenfläche des elastischen Schienenkörpers (18, 40) eine Verstärkungslasche (26, 42) o.dgl. aus einem starren Material angeordnet ist.

6. Teleskopschiene nach Anspruch 5, dadurch gekennzeichnet, daß an der Verstärkungslasche (26) Mittel (28) zur Befestigung der Schiene (4) am Schubfach bzw. an dem dieses aufnehmenden Gehäuse o.dgl. angeordnet sind.

7. Teleskopschiene nach Anspruch 3, dadurch gekennzeichnet, daß die Laufbahnen (84, 86) jeweils zwei parallele Laufrillen (88, 90; 92, 94) umfassen und daß auf jeder der beiden so gebildeten Laufbahnhälften eine Außenschiene (78, 80) geführt ist.

8. Teleskopschiene nach einem der Ansprüche 1 bis 7, dadurch gekennzeichnet, daß die Laufbahnen (62, 64; 88, 90; 92, 94 bzw. 36, 38; 108, 110) im Querschnitt kreisringsegmentförmig zur Aufnahme von Kugeln (54, 56; 96) bzw. U-förmig zur Aufnahme von Zylinderrollen als Wälzkörper ausgebildet sind.

9. Teleskopschiene nach einem der Ansprüche 1 bis 7, dadurch gekennzeichnet, daß die Laufbahnen (14, 16) im Querschnitt L-förmig zur Aufnahme von Zylinderrollen (20, 22) als Wälzkörper ausgebildet sind.

10. Teleskopschiene nach den Ansprüchen 5 und 9, dadurch gekennzeichnet, daß die Verstärkungslasche (26) an der offenen Seite der Laufbahnen (14, 16) jeweils über die Höhe des Laufbahnbodens ragt und damit eine Seitenwand der Laufbahnen (14, 16) bildet.

11. Teleskopschiene nach Anspruch 1, dadurch gekennzeichnet, daß der Schienenkörper aus einem Mittelsteg (116, 154) aus einem starren Material mit jeweils auf dessen längs verlaufenden Schmalseiten angeordneten Unterlagen (112, 114; 160, 161) aus elastischem Material gebildet ist.

12. Verfahren zur Herstellung einer Teleskopschiene gemäß einem der Ansprüche 1 bis 10, gekennzeichnet durch die folgenden Verfahrensschritte:

a) die starren Schienenteile (124, 126; 154; 158) werden in eine Vorrichtung (120, 142) eingelegt;

b) die starren Schienenteile (124, 126; 154, 158) werden durch verstellbare Schablonen (128, 130; 150, 152) o.dgl. in ihrer genauen gegenseitigen Position fixiert;

c) das elastische Material wird in die vorgesehenen Räume zwischen die starren Schienenteile (124, 126; 154, 156, 158) eingebracht und mit diesen verbunden;

d) die Schablonen werden gelöst und die Schiene aus der Vorrichtung (120, 142) entnommen.

13. Verfahren zur Herstellung einer Teleskopschiene gemäß Anspruch 11, gekennzeichnet durch folgende Verfahrensschritte:

a) ein aus dem Mittelsteg (154) und mit diesem über Verbindungsstege (162, 164) verbundenen Laufbahnen (156, 158) bestehendes Bauteil wird erstellt;

b) das elastische Material wird in die vorgesehenen Räume zwischen Mittelsteg (154) und Laufbahnen (156, 158) eingebracht und mit diesen verbunden;

c) die Verbindungsstege (162, 164) werden durchgetrennt.

14. Verfahren nach einem der Ansprüche 12 oder 13, mit Gummi oder gummiähnlichem Werkstoff als elastisches Material und metallischem Werkstoff für die übrigen Schienenteile, gekennzeichnet durch folgende Verfahrensschritte:

a) die starren Schienenteile (124, 126; 154, 156, 158) werden in eine äuf einer Seite offene, heizbare Vulkanisiervorrichtung (120, 142) eingelegt, wobei die zur Aufnahme des Gummis bestimmten Räume in Richtung der offenen Seite zeigen;

b) der Gummi wird in Form wenigstens einer Rohgummi-Matte auf die Schienenteile (124, 126; 154, 156, 158) aufgelegt;

c) die Rohgummi-Matten werden durch einen auf die offene Seite der Vorrichtung (120, 142) aufsetzbaren heizbaren Stempel (132, 144) verflüssigt und in die Räume zur Aufnahme des Gummis gedrückt;

d) der Stempel (132, 144) wird abgehoben und die Schiene wird entnommen.


## Claims

1. Roller-bearing-mounted telescopic track for drawers or the like, including at least one outer track (2; 48; 78, 80) with two rolling paths (6, 8; 58, 60) arranged on one track body (10) and aligned opposite one another and also including at least one inner track (4, 35, 50, 76, 106, 141) with two rolling paths (14, 16; 36, 38; 62, 64; 84, 86; 108, 110; 156, 158) arranged on one track body (18, 40, 50, 82, 117) and respectively turned toward the assigned rolling paths (6, 8; 58, 60) of the outer track, characterized in that the rolling paths (14, 16; 36, 38; 62, 64; 84, 86; 108, 110; 156; 158) of at least one track (4, 35, 50, 76, 106, 141) are embedded respectively on a base (18, 40, 66, 82, 112, 114, 160, 161) made of an elastic material and joined with the latter.

2. Telescopic track as claimed in Claim 1, characterized in that the track body (18, 40, 66, 82) is constructed as an elastic web carrying the rolling paths (14, 16; 36, 38; 62, 64; 84, 86).

3. Telescopic track as claimed in Claim 2, characterized in that on the elastic track body (18, 40, 66, 82), means (28, 42, 68, 102, 104) not touching the rolling paths (14, 16; 36, 38; 62, 64; 84, 86) are arranged for fastening the track to the drawer or to the cabinet or the like receiving the latter.

4. Telescopic track as claimed in any one of Claims 2 or 3, characterized in that the track body (18, 40, 66, 82) of the inner track is constructed as an elastic web and in that in its cross section it shows approximately the shape of a rectangle with rolling paths (14, 16; 36, 38; 62, 64; 84, 86) arranged on the narrow sides of this rectangle.

5. Telescopic track as claimed in any one of Claims 2 to 4, characterized in that a reinforcing plate (26, 42) or the like made of a rigid material is arranged on at least one lateral face of the elastic track body (18, 40).

6. Telescopic track as claimed in Claim 5, characterized in that means (28) are provided on the reinforcing plate (26) for fastening the track (4) to the drawer or to the cabinet or the like receiving this.

7. Telescopic track as claimed in Claim 3, characterized in that the rolling paths (84, 86) respectively include two parallel running grooves (88, 90; 92, 94) and that an outer track (78, 80) is guided on each of the halves of a rolling path thus formed.

8. Telescopic track as claimed in any one of Claims 1 to 7, characterized in that the rolling paths (62, 64; 88, 90; 92, 94 or respectively 36, 38; 108, 110) have the shape of a circular ring segment in cross section for receiving the balls (54, 56; 96) or U-shaped for receiving the cylindrical rollers as bearings.

9. Telescopic track as claimed in any one of Claims 1 to 7, characterized in that the rolling paths (14, 16) are L-shaped in cross section to receive cylindrical rollers (20, 22) as bearings.

10. Telescopic track as claimed in Claims 5 and 9, characterized in that the reinforcing plate (26) on the open side of the rolling paths (14, 16) respectively projects over the height of the rolling path bottom and thus forms a sidewall of the rolling paths (14, 16).

11. Telescopic track as claimed in Claim 1, characterized in that the track body is formed by a central web (116, 154) made of a rigid material with bases (112, 114; 160, 161) of elastic material arranged respectively running lengthwise along the narrow sides of the web.

12. process for producing a telescopic track as claimed in any one of Claims 1 to 10, characterized by the following procedure steps:

a) the rigid track parts (124, 126; 154, 158) are laid in a device (120, 142);

b) the rigid track parts (124, 126; 154, 158) are fixed in their exact mutual position by means of adjustable templates (128, 130; 150, 152) or the like;

c) the elastic material is put in the spaces provided between the rigid track parts (124, 126; 154, 156, 158) and joined with the latter;

d) the templates are released and the tracks taken out of the device (120, 142).

13. Process for producing a telescopic track as claimed in Claim 11, characterized by the following procedure steps:

(a) a structural component consisting of the central web (154) and rolling paths (156, 158) connected with this by way of connecting webs (162, 164) is put in place;

(b) the elastic material is placed in the spaces provided between central web (154) and rolling paths (156,158) and joined with the latter;

(c) the connecting webs (162, 164) are cut apart.

14. Process as claimed in any one of Claims 12 or 13, with rubber or rubber-like material as the elastic material and metal material for the remaining track parts,

<u>characterized by</u> the following procedure steps:

(a) the rigid track parts (124, 126; 154, 156, 58) are placed in a heatable vulcanizing device (120, 142) which is open at one side, where the spaces intended for receiving the rubber point in the direction of the open side;

(b) the rubber is placed on the track parts (124, 126; 154, 156, 158) in the form of at least one raw rubber mat;

(c) the raw rubber mats are liquified by a heatable force plug (132, 144) which can be placed on the open side of the device (120, 142) and forced into the spaces for receiving the rubber;

(d) the force plug (132, 144) is lifted off and the tracks are removed.

## Revendications

1. - Rail télescopique monté sur roulements pour tiroirs ou l'analogue, comportant au moins un rail extérieur (2; 48; 78, 80) muni de deux voies de roulement (6, 8; 58, 60) orientées l'une vers l'autre et disposées sur un corps de rail (10), et comportant également au moins un rail intérieur (4; 35; 50; 76; 106; 141) muni de deux voies de roulement (14, 16; 36, 38; 62, 64; 84, 86; 108, 110; 156, 158) disposées sur un corps de rail (18; 40; 50; 82; 117) et tournées respectivement vers les voies de roulement associées (6, 8; 58, 60) du rail extérieur, caractérisé en ce que les voies de roulement (14, 16; 36, 38; 62, 64; 84, 86; 108, 110; 156, 158) d'au moins un rail (4; 35; 50; 76; 106; 141) sont respectivement montées sur une base (18; 40; 66; 82; 112; 114; 160; 161) en un matériau élastique et sont reliées à celle-ci.

2. - Rail télescopique selon la revendication 1, caractérisé en ce que le corps de rail (18; 40; 66; 82) est réalisé sous la forme d'un bandeau élastique portant les voies de roulement (14, 16; 36, 38; 62, 64; 84, 86).

3. - Rail télescopique selon la revendication 2, caractérisé en ce que sur le corps de rail élastique (18; 40; 66; 82) sont disposés des moyens (28; 42; 68; 102; 104) ne touchant pas les voies de roulement (14, 16; 36, 38; 62, 64; 84, 86) pour fixer le rail sur le tiroir ou sur le carter ou l'analogue recevant celui-ci.

4. - Rail télescopique selon l'une des revendications 2 ou 3, caractérisé en ce que le corps de rail (18; 40; 66; 82) du rail intérieur est réalisé en tant que bandeau élastique et qu'il a en coupe transversale sensiblement la forme d'un rectangle, avec les voies de roulement (14, 16; 36, 38; 62, 64; 84, 86) disposées sur les petits côtés de ce rectangle.

5. - Rail télescopique selon l'une des revendications 2 à 4, caractérisé en ce qu'on place une plaque de renforcement (26; 42) ou l'analogue, en matériau rigide, sur au moins une des surfaces latérales du corps de rail élastique (18; 40).

6. - Rail télescopique selon la revendication 5, caractérisé en ce qu'on place sur la plaque de renforcement (26) des moyens (28) pour fixer le rail (14) sur le tiroir ou sur le carter ou l'analogue recevant celui-ci.

7. - Rail télescopique selon la revendication 3, caractérisé en ce que les voies de roulement (84, 86) comportent respectivement deux rainures de roulement parallèles (88, 90; 92, 94) et que sur chacune des deux moitiés de voies de roulement ainsi formées est guidé un rail extérieur (78; 80).

8. - Rail télescopique selon l'une des revendications 1 7, caractérisé en ce que les voies de roulement (62, 64; 88, 90; 92, 94 et/ou 36, 38; 108, 110) ont en coupe transversale une forme de segment d'anneau de cercle pour loger des billes (54, 56; 96), ou bien une forme de U pour recevoir des rouleaux cylindriques en tant que corps de roulement.

9. - Rail télescopique selon l'une des revendications 1 à 7, caractérisé en ce que les voies de roulement (14, 16) ont en coupe transversale la forme d'un L pour recevoir des rouleaux cylindriques (20, 22) en tant que corps de roulement.

10. - Rail télescopique selon les revendications 5 et 9, caractérisé en ce que la plaque de renforcement (26) dépasse, sur le côté ouvert des voies de roulement (14, 16) respectivement au dessus du niveau du fond de la voie de roulement et constitue ainsi une paroi latérale des voies de roulement (14, 16).

11. - Rail télescopique selon la revendication 1, caractérisé en ce que le corps de rail est constitué par un bandeau médian (116;154) en un matériau rigide avec des garnitures en matériau élastique (112, 114; 160, 161) disposées sur les côtés étroits de celui-ci.

12. - Procédé pour fabriquer un rail télescopique selon l'une des revendications 1 à 10, caractérisé par les stades suivants:

a) les parties de rail rigides (124, 126; 154, 158) sont placées dans un dispositif (120; 142);

b) les parties de rail rigides (124, 126; 154, 158) sont fixées dans leur position exacte l'une par rapport à l'autre par des gabarits réglables (128, 130; 150, 152) ou l'analogue; c) le matériau élastique est introduit dans les intervalles prévus entre les parties de rail rigides (124, 126; 150, 152) et relié avec celles-ci;

d) les gabarits sont dégagés et le rail est retiré du dispositif (120; 142).

13. - Procédé pour fabriquer un rail télescopique selon la revendication 11, caractérisé par les stades suivants:

a) on réalise un élément de construction constitué par le bandeau médian (154) et les voies de roulement (156, 158) reliées à celui-ci par des baguettes de liaison (162, 164);

b) le matériau élastique est introduit dans les intervalles prévus entre le bandeau médian (154) et les voies de roulement (156, 158);

c) les baguettes de liaison (162, 164) sont

**0 111 268**

sectionnées.

14. - Procédé selon l'une des revendications 12 ou 13, utilisant du caoutchouc ou un matériau analogue au caoutchouc en tant que matériau élastique, et un matériau métallique pour les autres parties du rail, caractérisé par les stades suivants:

a) les parties rigides de rail (124, 126; 154, 156, 158) sont placées dans un dispositif de vulcanisation (120; 142) ouvert sur un côté et pouvant être chauffé, les espaces prévus pour recevoir le caoutchouc étant orientés en direction du côté ouvert;

b) le caoutchouc est placé sur les parties de rail (124, 126; 154, 156, 158) sous la forme d'au moins d'une feuille de caoutchouc brut;

c) les feuilles de caoutchouc brut sont plastifiées, à l'aide d'un poinçon (132; 144) qui peut être placé sur le côté ouvert du dispositif et chauffé, et sont refoulées dans les espaces prévus pour recevoir le caoutchouc;

d) on relève le poinçon (132; 144) et on retire le rail.

FIG. 1

FIG. 2

FIG. 3

FIG. 4

FIG. 5

FIG. 6

FIG. 7

FIG. 8

FIG. 9

FIG. 10

FIG. 11